# EUROPÄISCHE PATENTSCHRIFT

(11) **EP 1 656 652 B1**
(45) Veröffentlichungstag und Bekanntmachung des Hinweises auf die Patenterteilung: **29.11.2006**
(21) Anmeldenummer: 04764031.3
(22) Anmeldetag: 12.08.2004
(51) Int. Cl.: G08G 1/0962, B60K 37/00

(54) **INFORMATIONSAUSGABESYSTEM EINES FAHRZEUGS UND ZUGEHÖRIGES INFORMATIONSAUSGABEVERFAHREN**
INFORMATION OUTPUT SYSTEM OF A VEHICLE AND ASSOCIATED INFORMATION OUTPUT METHOD
SYSTEME DE SORTIE D'INFORMATIONS D'UN VEHICULE, ET PROCEDE DE SORTIE D'INFORMATIONS CORRESPONDANT

(30) Priorität: 22.08.2003 DE 10338566
(43) Veröffentlichungstag der Anmeldung: 17.05.2006
(73) Patentinhaber: DaimlerChrysler AG, 70567 Stuttgart (DE)
(72) Erfinder: DOBLER, Günter, 73776 Altbach (DE); ENTENMANN, Volker, 71563 Affalterbach (DE); ROTHE, Siegfried, 73770 Denkendorf (DE); VOIGT, Cornelia, 73773 Schanbach-Aichwald (DE); WILLMANN, Sven, 79822 Titisee-Neustadt (DE)
(86) Internationale Anmeldenummer: PCT/EP2004/009027
(87) Internationale Veröffentlichungsnummer: WO 2005/022481

(56) Entgegenhaltungen:
- WO-A-01/24136
- DE-A- 10 103 401
- DE-A- 19 925 581

## Beschreibung

Die Erfindung betrifft ein Informationsausgabesystem eines Fahrzeugs nach dem Oberbegriff des Patentanspruchs 1 und ein zugehöriges Informationsausgabeverfahren.

In heutigen Fahrzeugen ist die Informationsausgabe eines Fahrzeugteilsystems, z.B. eines Navigationssystems, nur insofern mit der von anderen Fahrzeugteilsystemen wie beispielsweise Audio- und/oder Kommunikationssystemen koordiniert, als dass bei gleichzeitig vorliegenden Meldungen bzw. Ereignissen, beispielsweise ein Abbiegehinweis des Navigationssystems und ein eingehender Telefonanruf, die Meldungen nach ihrer Dringlichkeit priorisiert werden, um eine Überlagerung zu vermeiden. Im genannten Beispiel kann deshalb der akustische Abbiegehinweis des Navigationssystems unterdrückt werden, wenn das Telefon höher priorisiert ist. Zudem kann der Abbiegehinweis verloren gehen, wenn der Fahrer nur die akustische Informationsausgabe des Navigationssystems aktiviert hat. Das kann bedeuten, dass er keinen Abbieghinweis erhält und somit die vom Navigationssystem vorgegebene Route verlässt, ohne dies zu bemerken. Selbst wenn der Fahrer die optische Navigationsausgabe aktiviert hat, die Navigationshinweise beispielsweise in Form von Richtungspfeilen auf einer Anzeigeeinheit eines Kombinationsinstruments anzeigt, kann die Ablenkung durch den eingehenden Telefonanruf dazu führen, dass er den optischen Abbieghinweis nicht wahrnimmt und von der vorgegebenen Route abkommt.

Zudem können durch die fehlende Koordinierung der Informationsausgaben der verschiedenen Fahrzeugteilsysteme verwirrende Situationen entstehen. Störmeldungen, die sich auf die unmittelbare Betriebssicherheit des Fahrzeugs beziehen, wie z.B. geringer Motorölstand, haben normalerweise eine hohe Priorität, d.h. sie werden meistens sofort an den Fahrer ausgegeben. Auf ihr Erscheinen im Kombidisplay wird der Fahrer beispielsweise mit einem Signalton hingewiesen. Nun können Situationen auftreten, in denen der Fahrer eine solche Störmeldung erhält und unmittelbar darauf ein akustischer Abbiegehinweis des Navigationssystems ausgegeben wird, z.B. "In 300 m rechts abbiegen". Der Fahrer liest also nach der Aufforderung durch den Signalton auf der Anzeigeeinheit im Kombinationsinstrument, dass sein Motorölstand zu niedrig ist, und hört nahezu gleichzeitig, dass er rechts abbiegen soll. Dies kann zu einer Verwirrung des Fahrers führen, da er unter Umständen den Abbiegehinweis als Handlungsaufforderung im Zusammenhang mit der Störmeldung versteht, obwohl der Abbiegehinweis nichts mit dem niedrigen Motorölstand zu tun hat.

Die DE 100 01 263 C2 betrifft ein sprachbasiertes Informationsausgabesystem für ein Fahrzeug, das Daten über den Fahrzustand und/oder den Umgebungszustand des Fahrzeugs erfasst und in Abhängigkeit von den erfassten Daten Informationen von verschiedenen Fahrzeugteilsystemen, wie z.B. Klimaanlage, Audiosystem, Navigationssystem usw., mittels Sprache ausgibt. Zusätzlich bzw. alternativ werden ein optischer und ein haptischer Sinneskanal zur Informationsausgabe angegeben. Eine Koordinierung der Informationsausgaben der verschiedenen Fahrzeugteilsysteme wird nicht beschrieben.

Die DE 101 03 401 A1 betrifft ein Gefahrenabwendungssystem für ein Fahrzeug. Im Zusammenhang mit dem Gefahrenabwendungssystem wird eine Ausgabe von Informationen oder Warnmeldungen beschrieben, bei der in Abhängigkeit von einer Belastung des Fahrers ein geeigneter Sinneskanal für die Ausgabe gewählt wird, d.h. bei einer starken akustischen Belastung wird ein optischer, haptischer oder olfaktorischer Sinneskanal zur Ausgabe gewählt und bei einer starken optischen Belastung des Fahrers wird ein akustischer, haptischer oder olfaktorischer Sinneskanal gewählt. Zudem kann die Ausgabe der Informationen oder Warnmeldungen vorgezogen werden, um sie rechtzeitig vor einer zu erwarteten erhöhten Belastung des Fahrers auszugeben oder die Ausgabe kann verzögert werden, um sie erst im Anschluss an eine kurzfristige erhöhte Fahrerbelastung auszugeben. Zur Ermittlung der Fahrerbelastung wird eine aufwendige Auswertung der erfassten Daten durchgeführt.

Aufgabe der Erfindung ist es, ein Informationsausgabesystem für ein Fahrzeug zur Verfügung zu stellen, welches auszugebende Informationen von verschiedenen Fahrzeugteilsystemen besser koordiniert, damit der Fahrer weniger belastet und ein Informationsverlust nahezu vermieden wird sowie ein zugehöriges Informationsausgabeverfahren anzugeben.

Die Erfindung löst diese Aufgabe durch Bereitstellung eines Informationsaüsgabesystems mit den Merkmalen des Patentanspruchs 1 und durch ein Informationsausgabeverfahren mit den Merkmalen des Patentanspruchs 10.

Vorteilhafte Weiterbildungen der Erfindung sind in den abhängigen Ansprüchen angegeben.

Die Erfindung beruht auf der Idee, dass erfasste Daten eines Fahrzustandes und/oder eines Umgebungszustandes des Fahrzeugs, dahingehend ausgewertet werden, ob bei dem zur Ausgabe einer ersten Information ausgewählten Sinneskanal eine Kollision mit einer Ausgabe einer zweiten Information auftritt. Wird bei dieser Auswertung eine solche Kollision erkannt, dann wird der Sinneskanal zur Ausgabe der ersten oder der zweiten Information gewechselt. Alternativ wird bei der Ausgabe der ersten und der zweiten Information über denselben Sinneskanal die Ausgabe der ersten oder der zweiten Information zeitlich verschoben, so dass die Ausgabe der Information mit dem längeren Zeitbedarf zeitlich gegenüber der Ausgabe der Information mit dem kürzeren Zeitbedarf verzögert ist. Die Auswertung der Daten und die Ermittlung des Zeitbedarfs für die Ausgabe der ersten und der zweiten Information wird von einer Auswerte- und Steuereinheit durchgeführt.

Dadurch können die Informationsausgaben von verschiedenen Fahrzeugsystemen nahezu ohne Informationsverlust besser koordiniert werden. Eine vorhandene Priorität für die Informationsausgaben kann dahingehend berücksichtigt werden, dass der Sinneskanal der Informationsausgabe verändert wird, welche die niedrigere Priorität hat, während die Informationsausgabe mit der höheren Priorität über ihren bevorzugten Sinneskanal ausgegeben wird.

Wird für die Ausgabe der ersten und der zweiten Information derselbe Sinneskanal verwendet, dann kann die Priorität unberücksichtigt bleiben, wenn die Informationsausgabe mit der niedrigeren Priorität einen kürzeren Zeitbedarf hat als die Informationsausgabe mit der höheren Priorität.

Der Wechsel des Sinneskanals zur Informationsausgabe kann dem Fahrer optisch und/oder akustisch und/oder haptisch und/oder olfaktorisch angezeigt werden.

In einer Ausgestaltung des Informationsausgabesystems ist der bevorzugte Sinneskanal zur Ausgabe von Informationen eines Fahrzeugteilsystems vom Fahrer und/oder vom Hersteller voreinstellbar.

Stellt die Auswerte- und Steuereinheit bei der Kollisionsauswertung keine Kollision mit anderen Informationsausgaben fest, dann wählt sie zur Ausgabe der ersten Information den bevorzugten Sinneskanal für die Ausgabe dieser Information aus.

Bei einer Weiterbildung des Informationsausgabesystems ermittelt die Auswerte- und Steuereinheit aus den erfassten Daten Belastungszustände des Fahrers bezüglich der mindestens zwei Sinneskanäle. Abhängig von der ermittelten Belastung wird mindestens ein Sinneskanal für die Informationsausgabe ausgewählt. Dadurch kann der bevorzugte Sinneskanal an die aktuellen Verhältnisse im Fahrzeug oder in der Fahrzeugumgebung angepasst werden, wenn der Fahrer durch die Ausgabe der Information mit dem bevorzugten Sinneskanal zu stark belastet werden würde. Eine starke Belastung des optischen Sinneskanals wird beispielsweise erkannt, wenn eine hohe Verkehrsdichte und/oder eine schlechte Sicht vorliegen. Die Auswerte- und Steuereinheit wechselt dann zur Informationsausgabe beispielsweise auf den akustischen Sinneskanal. Ermittelt die Auswerte- und Steuereinheit zusätzlich eine Kollision mit einer anderen Informationsausgabe, dann kann der Sinneskanal oder der Zeitpunkt für die Informationsausgabe nochmals verändert werden.

Nach dem Wegfall der Kollision oder der Belastung stellt die Auswerte- und Steuereinheit wieder den bevorzugten Sinneskanal zur Ausgabe zukünftiger Informationen des zugehörigen Fahrzeugteilsystems ein.

Bei einer vorteilhaften Ausführungsform des Informationsausgabesystems sind die auszugebenden ersten Informationen von einem Navigationssystem, dabei werden diese ersten Informationen gegenüber auszugebenden zweiten Informationen von anderen Fahrzeugsystemen zeitlich vorgezogen oder verzögert ausgegeben.

Für die Verschiebung von Ausgabezeitpunkten sind die Informationsausgaben des Navigationssystems besonders gut geeignet, weil die Navigationshinweise in der Regel sehr frühzeitig erfolgen, z.B. in 300 m Entfernung von der nächsten Kreuzung, und zeitlich sowohl vorgezogen als auch verzögert werden können, ohne dass dadurch die Fahrerunterstützung beeinträchtigt wird.

Treten beispielsweise eine Störmeldung, die normalerweise eine sehr kurze Zeitdauer und eine sehr hohe Priorität hat, und ein Navigationshinweis gleichzeitig auf, dann wird die Ausgabe des Navigationshinweises gegenüber der Ausgabe der Störmeldung zeitlich verzögert.

Treten ein eingehender Telefonanruf, der normalerweise eine längere Zeitdauer benötigt und eine höhere Priorität hat, und ein Navigationshinweis gleichzeitig auf, dann wird der Navigationshinweis vorgezogen.

Zur Anpassung der auszugebenden Information des Navigationssystems an die zeitliche Verschiebung wertet die Auswerte- und Steuereinheit die Informationen des Navigationssystems kontinuierlich aus.

Das erfindungsgemäße Informationsausgabeverfahren in einem Fahrzeug erfasst, verarbeitet und wertet Daten des Fahrzustandes und/oder des Umgebungszustandes des Fahrzeugs aus. In Abhängigkeit von der Datenauswertung wird mindestens ein Sinneskanal zur Ausgabe von Informationen ausgewählt. Zusätzlich werden die erfassten Daten dahingehend auswertet, ob bei dem zur Ausgabe einer ersten Information auswählten Sinneskanal eine Kollision mit einer Ausgabe einer zweiten Information auftritt. Wird eine solche Kollision erkannt, dann wird der Sinneskanal für die Ausgabe der ersten oder der zweiten Information gewechselt oder bei der Ausgabe der ersten und der zweiten Information über denselben Sinneskanal wird ein Zeitbedarf für die Ausgabe der ersten und der zweiten Information ermittelt und die Information mit dem längeren Zeitbedarf wird zeitlich gegenüber der Information mit dem kürzeren Zeitbedarf verzögert ausgegeben.

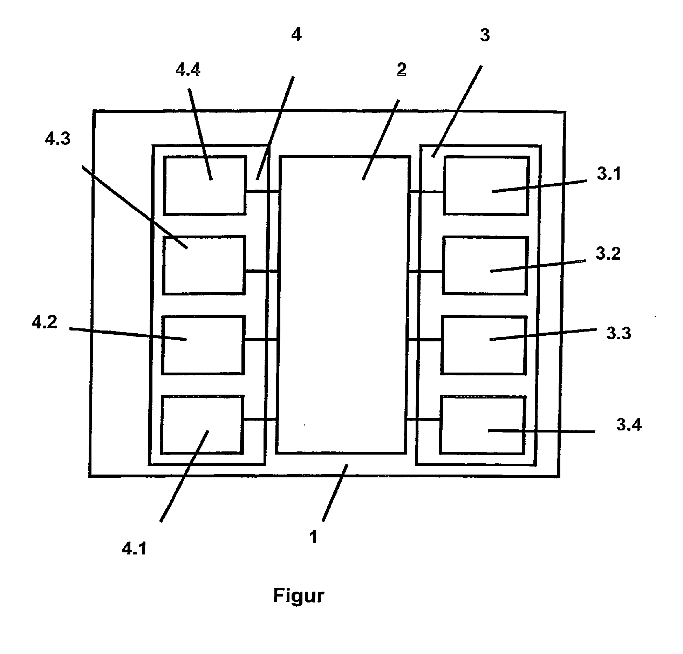

Eine vorteilhafte Ausführungsform der Erfindung ist in der Zeichnung dargestellt und wird nachfolgend beschrieben.

Die Figur zeigt ein schematisches Blockschaltbild eines Informationsausgabesystems für ein Fahrzeug.

Wie aus der Figur ersichtlich ist, umfasst das Informationsausgabesystem 1 eines Fahrzeugs Mittel 3 zum Erfassen von Daten des Fahrzustandes und/oder Umgebungszustandes des Fahrzeugs, Mittel 4 zur Informationsausgabe und eine Auswerte- und Steuereinheit 2.

Unter Fahrzeugzustandsdaten werden beispielsweise Daten über Fahrzeuggeschwindigkeit, Gier-, Längs- und Querbeschleunigung, Bremspedal- und Fahrpedalstellung, Lenkwinkel, der Status von Bedienelementen und der Status von Sensoren und Steuergeräten verstanden.

Als Umgebungsdaten werden Daten bezeichnet, die von Umgebungssensoren, Telematiksystemen und durch ein fahrzeugseitiges Kommunikationssystem, das mit anderen Fahrzeugen und/oder stationären Kommunikationssystemen kommuniziert, zur Verfügung gestellt werden. Beispiele für Umgebungsdaten sind Informationen zum aktuellen Ort, beispielsweise ob sich die befahrene Wegstrecke in einem Wohngebiet, am Waldrand oder auf einer Brücke befindet, zur Straßenkategorie, z.B. ob die befahrene Straße eine Autobahn, ein Nebenstraße, einspurig, mehrspurig, mit oder ohne Gegenverkehr ist. Und zur Fahrspur auf der das eigene Fahrzeug fährt. Weitere Umgebungsdaten sind Straßenzustand, Temperatur, Witterung, Lichtverhältnisse, Umgebungsgeräusche, Luftqualität und Windverhältnisse, Geschwindigkeit, Abstand, Bewegungsrichtung Art und Zustand von vorausfahrenden, benachbarten, nachfolgenden oder entgegenkommenden Fahrzeugen oder anderen Verkehrsteilnehmern.

Beispielhaft sind als Mittel 3 zur Erfassung solcher Daten Fahrzeugteilsysteme wie ein Navigationssystem 3.1, ein Kommunikationssystem 3.2, Umgebungssensoren 3.3 und Steuergeräte 3.4 dargestellt.

Die Auswerte- und Steuereinheit 2 verarbeitet solche Daten und wertet sie aus. In Abhängigkeit von der Auswertung steuert die Auswerte- und Steuereinheit 2 die Mittel 4 zur Informationsausgabe und wählt zur Ausgabe einer Information wenigstens einen Sinneskanal der Mittel 4 zur Informationsausgabe aus. Zur Ausgabe einer Information von einem der Fahrzeugteilsysteme wird ein für die betreffende Information oder für das zugehörige Fahrzeugteilsystem vom Fahrer oder vom Hersteller voreingestellter bevorzugter Sinneskanal ausgewählt.

Vor der Ausgabe der Information über den ausgewählten Sinneskanal wertet die Auswerte- und Steuereinheit erfindungsgemäß die erfassten Daten dahingehend aus, ob bei dem zur Ausgabe einer ersten Information ausgewählten Sinneskanal eine Kollision mit einer Ausgabe einer zweiten Information auftritt. Wird eine solche Kollision erkannt, beispielsweise weil der entsprechende Sinneskanal schon von einem anderen System benutzt wird, dann wird der ausgewählte Sinneskanal zur Ausgabe der ersten oder der zweiten Information gewechselt oder bei der Ausgabe der ersten und der zweiten Information über denselben Sinneskanal wird die Ausgabe der ersten oder der zweiten Information zeitlich verschoben, so dass die Ausgabe der Information mit dem längeren Zeitbedarf zeitlich gegenüber der Ausgabe der Information mit dem kürzeren Zeitbedarf verzögert ist. Die Ermittlung des Zeitbedarfs für die Ausgabe der ersten und der zweiten Information wird ebenfalls von der Auswerte- und Steuereinheit 2 durchgeführt.

Selbstverständlich können auch mehrere Sinneskanäle zur Ausgabe einer Information benutzt werden, beispielsweise ein optischer und ein akustischer Sinneskanal, die dann erfindungsgemäß auf eine Kollision überprüft werden.

Die Mittel 4 zur Informationsausgabe umfassen eine akustische Ausgabeeinheit 4.1 zur Nutzung des akustischen Sinneskanals des Fahrers, welche beispielsweise ein Sprachausgabeeinheit und eine Einheit zur Erzeugung und Ausgabe von verschiedenen Tönen über einen oder mehrere Lautsprecher umfasst, eine optische Ausgabeeinheit 4.2 zur Nutzung des optischen Sinneskanals des Fahrers, welche beispielsweise eine Bildschirmanzeige und/oder ein Multifunktionsdisplay umfasst, eine haptische Ausgabeeinheit 4.3 zur Nutzung des haptischen Sinneskanals des Fahrers und eine olfaktorische Ausgabeeinheit 4.4 zur Nutzung des olfaktorischen Sinneskanals des Fahrers.

Der Wechsel des Sinneskanals zur Informationsausgabe wird dem Fahrer über die Mittel zur Informationsausgabe 4 optisch und/oder akustisch und/oder haptisch und/oder olfaktorisch angezeigt, wobei zur Anzeige des Wechsel vorzugsweise der voreingestellte Sinneskanal für dieses Fahrzeugteilsystem benutzt wird.

Bei einem erforderlichen Wechsel vom akustischen auf den optischen Sinneskanal, erfolgt der Wechsel beispielsweise durch einen Hinweiston, welcher den Fahrer auffordert auf die optische Ausgabeeinheit 4.2 zu schauen. Gleichzeitig erscheint dort beispielsweise die auszugebende Richtungsinformation des Navigationssystems 3.2 in Form einer Anzeige mit Richtungspfeilen und Entfernungsangaben.

Der Wechsel vom optischen zum akustischen Kanal kann z.B. durch eine Sprachausgabe "Modalitätswechsel bei Navigationshinweisen" der akustischen Ausgabeeinheit 4.1 erfolgen, die den Fahrer über den Wechsel informiert.

Zusätzlich ermittelt die Auswerte- und Steuereinheit 2 beim dargestellten Informationsausgabesystem aus den erfassten Daten Belastungszustände des Fahrers bezüglich der auswählbaren Sinneskanäle. Die ermittelte Belastung fließt bei der Auswahl des Sinneskanals zur Informationsausgabe zusätzlich zur Kollisionsüberprüfung ein.

So wird beispielsweise der voreingestellte bevorzugte optische Sinneskanal bei einer großen optischen Belastung des Fahrers, beispielsweise durch schlechte Sicht oder hohes Verkehrsaufkommen, in den akustischen und/oder haptischen und/oder olfaktorischen Sinneskanal geändert.

Nach Wegfall der Kollision oder der Belastung stellt die Auswerte- und Steuereinheit 2 wieder den bevorzugten Sinneskanal zur Ausgabe zukünftiger Informationen des zugehörigen Fahrzeugteilsystems ein.

Für die Verschiebung von Ausgabezeitpunkten sind insbesondere auszugebende Informationen des Navigationssystems geeignet, weil die Navigationshinweise in der Regel sehr frühzeitig, z.B. in 300 m Entfernung von der nächsten Kreuzung, erfolgen und zeitlich sowohl vorgezogen als auch verzögert werden können, ohne dass dadurch die Fahrerunterstützung beeinträchtigt wird.

Nachfolgend wird anhand von Beispielen die Funktionsweise des Informationsausgabesystems beschrieben.

Der Fahrer hat das Navigationssystem 3.1 aktiviert und befindet sich im dem Fahrzeug 500m vor einer Kreuzung, an der er nach rechts abbiegen muss. In diesem Moment geht ein Telefonanruf über das Kommunikationssystem 3.2 ein. Die Auswerte- und Steuereinheit 2 erkennt durch Auswerten der Daten, dass sich der Fahrer an eine Kreuzung annähert und dort abbiegen muss und die entsprechende voreingestellte akustische Ausgabe der Informationen des Navigationssystems 3.1 bei Annahme des Telefongesprächs mit dem Telefongespräch kollidieren würde. Nach Ermittlung der voraussichtlichen Zeitdauer für die Informationsausgabe erkennt die Auswerte- und Steuereinheit 2, dass die Ausgabe der ersten Information, hier des Richtungshinweises des Navigationssystems 3.1 kürzer ist als die Ausgabe der zweiten Information, hier die Nutzung des akustischen Sinneskanals durch den angenommenen Telefonanruf. Deshalb unterdrückt die Auswerte- und Steuereinheit den im Fahrzeug ankommenden Telefonanruf um eine Zeitspanne die ausreicht, die erste Information auszugeben, beispielsweise um 5 Sekunden. Gleichzeitig wird der Richtungshinweis des Navigationssystems vorgezogen, und der Fahrer erhält die akustische Aufforderung "In 500 m rechts abbiegen". Erst dann wird der Telefonanruf durchgestellt. Nach der Annahme des Telefonanrufs wird beispielsweise der voreingestellte bevorzugte akustische Sinneskanal zur Ausgabe der Navigationsinformationen auf den optischen Sinneskanal geändert. Dies wird dem Fahrer durch einen Hinweiston mitgeteilt.

Durch das Vorziehen der akustischen Navigationsausgabe, aus 300m sind 500m geworden, wird das Situationsbewusstsein des Fahrer deutlich verbessert, denn er weiß jetzt, dass er demnächst abbiegen muss, und auch wenn durch das angenommene Telefongespräch keine weiteren akustischen Navigationsinformationen mehr ausgegeben werden, kann er seine Aufmerksamkeit verstärkt der optischen Ausgabe der Navigationsinformationen zuwenden.

Im Fall das eine Störmeldung und eine Navigationsausgabe gleichzeitig auftreten ermittelt die Auswerte- und Steuereinheit 2 die Zeitdauer für die jeweilige Informationsausgabe und da diese ungefähr gleich lang sind und die Störmeldung die höhere Priorität hat, wird sie sofort ausgegeben. Um dem Fahrer genügend Zeit zu geben, diese Meldung wahrzunehmen und zu verarbeiten, wird die Ausgabe der Navigationsinformation verzögert. Aus "In 300 m rechts abbiegen" wird z.B. "In 150 m rechts abbiegen". Dies ist immer noch rechtzeitig genug und ermöglicht es dem Fahrer sich im Augenblick ausschließlich mit der Störmeldung zu befassen.

Um die Koordination der Ausgaben von Navigationsinformationen und der Informationsausgaben von anderen Fahrzeugteilsystemen noch zu verbessern, wertet die Auswerte- und Steuereinheit 2 die Informationen des Navigationssystems kontinuierlich aus, um sie für die Ausgabe an die zeitliche Verschiebung besser anpassen zu können, beispielsweise um die aktuellen Entfernungen in den Text der Sprachausgabe einzubinden.

Das Informationsausgabeverfahren umfasst die Schritte: Erfassen des Fahrzustandes und/oder des Umgebungszustandes des Fahrzeugs, Verarbeitung und Auswertung der erfassten Daten, Auswahl mindestens eines Sinneskanals in Abhängigkeit von der Datenauswertung und Ausgabe von Informationen über den ausgewählten Sinneskanal. Die erfassten Daten werden dahingehend ausgewertet, ob bei dem zur Ausgabe einer ersten Information auswählten Sinneskanal eine Kollision mit einer Ausgabe einer zweiten Information auftritt. Wird eine solche Kollision erkannt, dann wird der Sinneskanal für die Ausgabe der ersten oder der zweiten Information gewechselt oder bei der Ausgabe der ersten und der zweiten Information über denselben Sinneskanal wird ein Zeitbedarf für die Ausgabe der ersten und der zweiten Information ermittelt und die Information mit dem längeren Zeitbedarf wird zeitlich gegenüber der Information mit dem kürzeren Zeitbedarf verzögert ausgegeben, wobei bei gleichem Zeitbedarf die Information mit der höheren Priorität ausgegeben wird.

Da auszugebende Informationen von verschiedenen Fahrzeugsystemen bei auftretenden Kollisionen koordiniert werden, d.h. zeitlich verschoben oder über einen anderen Sinneskanal ausgegeben werden, kann ein Informationsverlust nahezu vermieden werden und der Fahrer bei seinen Aufgaben besser unterstützt werden.

## Patentansprüche

1. Informationsausgabesystem eines Fahrzeugs mit
- Mitteln (3) zum Erfassen des Fahrzustandes und/oder des Umgebungszustandes des Fahrzeugs,
- Mitteln (4) zur Informationsausgabe mit mindestens zwei Sinneskanälen,
- einer Auswerte- und Steuereinheit (2) zur
o Verarbeitung und Auswertung der erfassten Daten und
o zur Ansteuerung der Mittel (4) zur Informationsausgabe in Abhängigkeit von der Datenauswertung,
o wobei zur Informationsausgabe mindestens einer der mindestens zwei Sinneskanäle auswählbar ist,
**dadurch gekennzeichnet, dass**
- die Auswerte- und Steuereinheit (2)die erfassten Daten dahingehend auswertet,
o. ob bei dem zur Ausgabe einer ersten Information ausgewählten Sinneskanal eine Kollision mit einer Ausgabe einer zweiten Information auftritt und
o bei einer erkannten Kollision den Sinneskanal zur Ausgabe der ersten oder der zweiten Information wechselt oder
o bei der Ausgabe der ersten und der zweiten Information über denselben Sinneskanal einen Zeitbedarf für die Ausgabe der ersten und der zweiten Information ermittelt und die Ausgabe der Information mit dem längeren Zeitbedarf zeitlich gegenüber der Ausgabe der Information mit dem kürzeren Zeitbedarf verzögert, wobei bei gleichem Zeitbedarf die Information mit einer höheren Priorität zuerst ausgegeben wird.

2. Informationsausgabesystem nach Anspruch 1, **dadurch gekennzeichnet, dass** der Wechsel des Sinneskanals zur Informationsausgabe dem Fahrer optisch und/oder akustisch und/oder haptisch und/oder olfaktorisch anzeigbar ist.

3. Informationsausgabesystem nach Anspruch 1 oder 2, **dadurch gekennzeichnet, dass** der bevorzugte Sinneskanal zur Ausgabe von Informationen eines Fahrzeugteilsystems (3.1, 3.2, 3.3, 3.4) vom Fahrer und/oder vom Hersteller voreinstellbar ist.

4. Informationsausgabesystem nach Anspruch 3, **dadurch gekennzeichnet, dass** die Auswerte- und Steuereinheit (2) zur Ausgabe der ersten Information den bevorzugten Sinneskanal zur Ausgabe dieser Information auswählt, wenn bei der Kollisionsauswertung keine Kollision mit anderen Informationsausgaben festgestellt wird.

5. Informationsausgabesystem nach Anspruch 1 bis 5, **dadurch gekennzeichnet, dass** die Auswerte- und Steuereinheit (2) aus den erfassten Daten Belastungszustände des Fahrers bezüglich der mindestens zwei Sinneskanäle ermittelt und in Abhängigkeit von der ermittelten Belastung mindestens einen Sinneskanal für die Informationsausgabe auswählt.

6. Informationsausgabesystem nach einem der Ansprüche 3 bis 5, **dadurch gekennzeichnet, dass** die Auswerte- und Steuereinheit (2) nach dem Wegfall der Kollision oder der Belastung wieder den bevorzugten Sinneskanal zur Ausgabe zukünftiger Informationen des zugehörigen Fahrzeugteilsystems (3.1, 3.2, 3.3, 3.4) einstellt.

7. Informationsausgabesystem nach einem der Ansprüche 1 bis 6, **dadurch gekennzeichnet, dass** die auszugebende erste Information von einem Navigationssystem (3.1) ist, die zur Ausgabe gegenüber auszugebenden zweiten Informationen von anderen Fahrzeugsystemen (3.2, 3.3, 3.4) zeitlich vorgezogen oder verzögert wird.

8. Informationsausgabesystem nach Anspruch 7, **dadurch gekennzeichnet, dass** die Navigationsinformation gegenüber Störmeldungen zeitlich verzögert und gegenüber einem eingehenden Telefonanruf vorgezogen ausgegeben wird.

9. Informationsausgabesystem nach Anspruch 7 oder 8, **dadurch gekennzeichnet, dass** die Auswerte- und Steuereinheit (2) die Informationen des Navigationssystems kontinuierlich auswertet, um sie für die Ausgabe an die zeitliche Verschiebung anzupassen.

10. Informationsausgabeverfahren in einem Fahrzeug mit den Schritten:
- Erfassen des Fahrzustandes und/oder Umgebungszustandes des Fahrzeugs,
- Verarbeitung und Auswertung der erfassten Daten,
- Auswahl mindestens eines Sinneskanals in Abhängigkeit von der Datenauswertung und
- Ausgabe von Informationen über den ausgewählten Sinneskanal,
**dadurch gekennzeichnet, dass**
- die erfassten Daten dahingehend ausgewertet werden, ob bei dem zur Ausgabe einer ersten Information ausgewählten Sinneskanal eine Kollision mit einer Ausgabe einer zweiten Information auftritt und
- bei einer erkannten Kollision der Sinneskanal für die Ausgabe der ersten oder der zweiten Information gewechselt wird oder
- bei der Ausgabe der ersten und der zweiten Information über denselben Sinneskanal ein Zeitbedarf für die Ausgabe der ersten und der zweiten Information ermittelt wird und die Information mit dem längeren Zeitbedarf zeitlich gegenüber der Information mit dem kürzeren Zeitbedarf verzögert ausgegeben wird, wobei bei gleichem Zeitbedarf die Information mit einer höheren Priorität zuerst ausgegeben wird.

11. Informationsausgabe verfahren nach Anspruch 10, **dadurch gekennzeichnet, dass** zur Auswahl des Sinneskanals für die Informationsausgabe aus den erfassten Daten Belastungszustände des Fahrers bezüglich der Sinneskanäle ermittelt werden, wobei zur Ausgabe der Information der Sinneskanal mit dem geringsten Belastungszustand ausgewählt wird.

12. Informationsausgabe verfahren nach Anspruch 10 oder 11, **dadurch gekennzeichnet, dass** der Wechsel des Sinneskanals zur Informationsausgabe dem Fahrer optisch und/oder akustisch und/oder haptisch und/oder olfaktorisch angezeigt wird.

## Claims

1. Information output system of a vehicle having
- means (3) for sensing the driving state and/or the state of the surroundings of the vehicle,
- means (4) for the outputting of information using at least two sensory channels,
- an evaluation and control unit (2) for
o processing and evaluating the collected data, and
o for actuating the means (4) for the outputting of information as a function of the data evaluation,
o wherein at least one of the at least two sensory channels can be selected for the outputting of information,
**characterized in that**
- the evaluation and control unit (2) evaluates the collected data to determine,
o whether a collision with the outputting of a second information item occurs with the sensory channel selected for outputting a first information item, and
o when a collision is detected changes over the sensory channel to outputting the first or the second information item, or
o when the first and the second information item is output using the same sensory channel the time required for outputting the first and second information items is determined and the outputting of the information item with the longer time requirement is delayed compared to the outputting of the information item with the shorter time requirement, in which case if the time requirements are the same the information item with a higher priority is output first.

2. Information output system according to Claim 1, **characterized in that** the changeover of the sensory channel for the outputting of information can be indicated to the driver visually and/or audibly and/or haptically and/or olfactorily.

3. Information output system according to Claim 1 or 2, **characterized in that** the preferred sensory channel for the outputting of information from a vehicle subsystem (3.1, 3.2, 3.3, 3.4) can be preset by the driver and/or by the manufacturer.

4. Information output system according to Claim 3, **characterized in that**, in order to output the first information item, the evaluation and control unit (2) selects the preferred sensory channel for outputting this information item if during the collision evaluation no collision with other information outputs is detected.

5. Information output system according to Claims 1 to 5, **characterized in that** the evaluation and control unit (2) determines, from the collected data, load states of the driver with respect to the at least two sensory channels and selects at least one sensory channel for the outputting of information, as a function of the determined load.

6. Information output system according to one of Claims 3 to 5, **characterized in that**, after the collision or the load has been eliminated, the evaluation and control unit (2) resets the preferred sensory channel for the outputting of future information from the associated vehicle subsystem (3.1, 3.2, 3.3, 3.4).

7. Information output system according to one of Claims 1 to 6, **characterized in that** the first information item which is to be output is from a navigation system (3.1) which, with respect to the outputting of information, is moved forward in terms of timing or delayed compared to second information items to be output by other vehicle systems (3.2, 3.3, 3.4).

8. Information output system according to Claim 7, **characterized in that** the navigation information is output with a delay compared to fault messages and is output brought forward in terms of timing compared to an incoming telephone call.

9. Information output system according to Claim 7 or 8, **characterized in that** the evaluation and control unit (2) continuously evaluates the information from the navigation system in order to adapt it to the change in the timing of the outputting process.

10. Information output method in a vehicle having the steps:
- sensing of the driving state and/or state of the surroundings of the vehicle,
- processing and evaluation of the collected data,
- selection of at least one sensory channel as a function of the evaluation of the data, and
- outputting of information about the selected sensory channel,
**characterized in that**
- the collected data is evaluated to determine whether a collision with the outputting of a second information item occurs with the sensory channel selected for outputting a first information item, and
- when a collision is detected changes over the sensory channel to outputting the first or the second information item, or
- when the first and the second information item is output using the same sensory channel the time required for outputting the first and second information items is determined and the outputting of the information item with the longer time requirement is delayed compared to the outputting of the information item with the shorter time requirement, in which case if the time requirements are the same the information item with a higher priority is output first.

11. Information output method according to Claim 10, **characterized in that**, in order to select the sensory channel for the outputting of information from the collected data, load states of the vehicle with respect to the sensory channels are determined, wherein the sensory channel with the smallest load state is selected for the outputting of information.

12. Information output method according to Claim 10 or 11, **characterized in that** the change of the sensory channel for outputting information is indicated to the driver visually and/or audibly and/or haptically and/or olfactorily.

## Revendications

1. Système de délivrance d'informations d'un véhicule comprenant
- des moyens (3) de détection de la situation de conduite et/ou l'état de l'environnement du véhicule,
- des moyens (4) de délivrance d'informations avec au moins deux canaux sensoriels,
- une unité d'interprétation et de commande (2) pour
o traiter et interpréter les données acquises et
o pour commander les moyens (4) de délivrance d'informations en fonction de l'interprétation des données,
o au moins l'un des au moins deux canaux sensoriels pouvant être sélectionné pour délivrer les informations,
**caractérisé en ce que**
- l'unité d'interprétation et de commande (2) interprète les données acquises pour vérifier
o si avec le canal sensoriel sélectionné pour la délivrance d'une première information, il se produit une collision avec la délivrance d'une deuxième information et
o en cas de détection d'une collision, le canal sensoriel de délivrance de la première ou de la deuxième information change ou
o en cas de délivrance de la première et de la deuxième information par le biais du même canal sensoriel, un temps nécessaire pour la délivrance de la première et de la deuxième information est déterminé et la délivrance de l'information nécessitant le temps le plus long est retardée dans le temps par rapport à la délivrance de l'information nécessitant le temps le plus court, l'information ayant la priorité la plus élevée étant délivrée en premier en cas d'un temps nécessaire identique.

2. Système de délivrance d'informations selon la revendication 1, **caractérisé en ce que** le changement de canal sensoriel de délivrance d'informations peut être signalé au conducteur de manière visuelle et/ou sonore et/ou haptique et/ou olfactive.

3. Système de délivrance d'informations selon la revendication 1 ou 2, **caractérisé en ce que** le canal sensoriel préférentiel pour la délivrance d'informations d'un système partiel du véhicule (3.1, 3.2, 3.3, 3.4) peut être réglé à l'avance par le conducteur et/ou le constructeur.

4. Système de délivrance d'informations selon la revendication 3, **caractérisé en ce que** l'unité d'interprétation et de commande (2) sélectionne, pour délivrer la première information, le canal sensoriel préférentiel en vue de délivrer cette information si, lors de l'interprétation de la collision, aucune collision avec les autres délivrances d'informations n'est constatée.

5. Système de délivrance d'informations selon l'une des revendications 1 à 5, **caractérisé en ce que** l'unité d'interprétation et de commande (2) détermine à partir des données acquises des états de charge du conducteur en rapport avec les au moins deux canaux sensoriels et sélectionne au moins un canal sensoriel en fonction de la charge déterminée.

6. Système de délivrance d'informations selon l'une des revendications 3 à 5, **caractérisé en ce que** l'unité d'interprétation et de commande (2), après la disparition de la collision ou de la charge, rétablit de nouveau le canal sensoriel préférentiel pour la délivrance des futures informations du système partiel du véhicule (3.1, 3.2, 3.3, 3.4) associé.

7. Système de délivrance d'informations selon l'une des revendications 1 à 6, **caractérisé en ce que** la première information à délivrer provient d'un système de navigation (3.1) dont la délivrance est avancée dans le temps ou retardée par rapport aux deuxièmes informations à délivrer des autres systèmes du véhicule (3.2, 3.3, 3.4).

8. Système de délivrance d'informations selon la revendication 7, **caractérisé en ce que** l'information de navigation est retardée par rapport aux messages d'erreur et délivrée en avance dans le temps par rapport à un appel téléphonique entrant.

9. Système de délivrance d'informations selon la revendication 7 ou 8, **caractérisé en ce que** l'unité d'interprétation et de commande (2) interprète continuellement les informations du système de navigation afin de les adapter au décalage dans le temps en vue de leur délivrance.

10. Procédé de délivrance d'informations dans un véhicule automobile comprenant les étapes :
- détection de la situation de conduite et/ou l'état de l'environnement du véhicule,
- traitement et interprétation des données acquises,
- sélection d'au moins un canal sensoriel en fonction de l'interprétation des données et
- délivrance d'informations par le biais du canal sensoriel sélectionné,
**caractérisé en ce que**
- les données acquises sont interprétées pour vérifier si avec le canal sensoriel sélectionné pour la délivrance d'une première information, il se produit une collision avec la délivrance d'une deuxième information et
- en cas de détection d'une collision, le canal sensoriel de délivrance de la première ou de la deuxième information est modifié ou
- en cas de délivrance de la première et de la deuxième information par le biais du même canal sensoriel, un temps nécessaire pour la délivrance de la première et de la deuxième information est déterminé et l'information nécessitant le temps le plus long est délivrée retardée dans le temps par rapport à la l'information nécessitant le temps le plus court, l'information ayant la priorité la plus élevée étant délivrée en premier en cas d'un temps nécessaire identique.

11. Procédé délivrance d'informations selon la revendication 10, **caractérisé en ce que** les états de charge du conducteur en rapport avec les canaux sensoriels sont déterminés pour la sélection du canal sensoriel destiné à la délivrance d'informations, le canal sensoriel ayant le niveau de charge le plus faible étant sélectionné pour la délivrance d'informations.

12. Procédé de délivrance d'informations selon la revendication 10 ou 11, **caractérisé en ce que** le changement de canal sensoriel de délivrance d'informations est signalé au conducteur de manière visuelle et/ou sonore et/ou haptique et/ou olfactive.
